# EUROPÄISCHE PATENTSCHRIFT

(11) **EP 1 256 482 B1**
(45) Veröffentlichungstag und Bekanntmachung des Hinweises auf die Patenterteilung: **29.06.2011**
(21) Anmeldenummer: 02450090.2
(22) Anmeldetag: 17.04.2002
(51) Int. Cl.: B60M 1/28

(54) **Verfahren zur Verlegung einer elektrischen Fahrleitung sowie Maschine**
Method and machine for installation of a catenary contact wire
Méthode et machine pour l'installation d'une ligne de contact caténaire

(30) Priorität: 11.05.2001 AT 3782001 U
(43) Veröffentlichungstag der Anmeldung: 13.11.2002
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- DE-C- 4 334 063
- US-A- 5 826 860

## Beschreibung

Die Erfindung betrifft ein Verfahren gemäß den im Oberbegriff von Anspruch 1 angeführten Merkmalen sowie eine Maschine zur Verlegung einer Fahrleitung.

Ein derartiges Verfahren ist bereits durch US 5 826 860 bekannt, wobei zur Erzielung einer bestimmten Abzugskraft bzw. Seilspannung eine Friktionswinde vorgesehen ist. Diese wird mittels eines Hydraulikmotors derart beaufschlagt, daß unabhängig von der Vorfahrtgeschwindigkeit der Maschine eine konstante Seilspannung aufrecht erhalten wird.

Die Aufgabe der vorliegenden Erfindung liegt nun in der Schaffung eines Verfahrens der gattungsgemäßen Art, mit dem unter Einsatz lediglich geringer konstruktiver Mittel eine exakte Seilspannung erzielbar ist.

Erfindungsgemäß wird diese Aufgabe mit einem Verfahren der eingangs genannten Art durch die im Anspruch 1 angeführten Erfindungsmerkmale gelöst.

Durch dieses Verfahren erübrigt sich die Notwendigkeit eines eigenen Motors zur Versorgung eines Hydraulikantriebes für die Seilspannung, da in vorteilhafter Weise die Abzugskraft als Antrieb für eine Hydraulikpumpe genutzt wird. Mit dem Druckbegrenzungsventil kann auf einfache Weise eine gewünschte Seilspannung eingestellt und auch problemlos konstant gehalten werden.

Eine weitere Aufgabe der vorliegenden Erfindung liegt auch in der Schaffung einer Maschine zur Verlegung einer Fahrleitung, die auch bei reduziertem konstruktivem Aufwand die Aufrechterhaltung einer konstanten Seilspannung ermöglicht.

Erfindungsgemäß wird diese Aufgabe mit den im Anspruch 2 angeführten Erfindungsmerkmalen gelöst. Durch diese konstruktive Lösung erübrigt sich die Notwendigkeit eines eigenen Hydraulikantriebes zur Versorgung der Bremsvorrichtung, wobei die sehr einfach ohne eigenen Fahrantrieb auszubildende Maschine von einer Lokomotive gezogen werden kann.

Weitere Vorteile und Ausbildungen der Erfindung ergeben sich aus den Unteransprüchen und der Zeichnung.

Im folgenden wird die Erfindung anhand von in der Zeichnung dargestellten Ausführungsbeispielen näher beschrieben.

Es zeigen:
Fig. 1 eine vereinfachte Seitenansicht einer Maschine mit einer Bremsvorrichtung zur Erzeugung einer Verlegespannung
Fig. 2 ein weiteres Ausführungsbeispiel einer Maschine
Fig. 3 eine schematische Darstellung einer Bremsvorrichtung,
Fig. 4 und 5 einen Hydraulikplan für die Bremsvorrichtung.

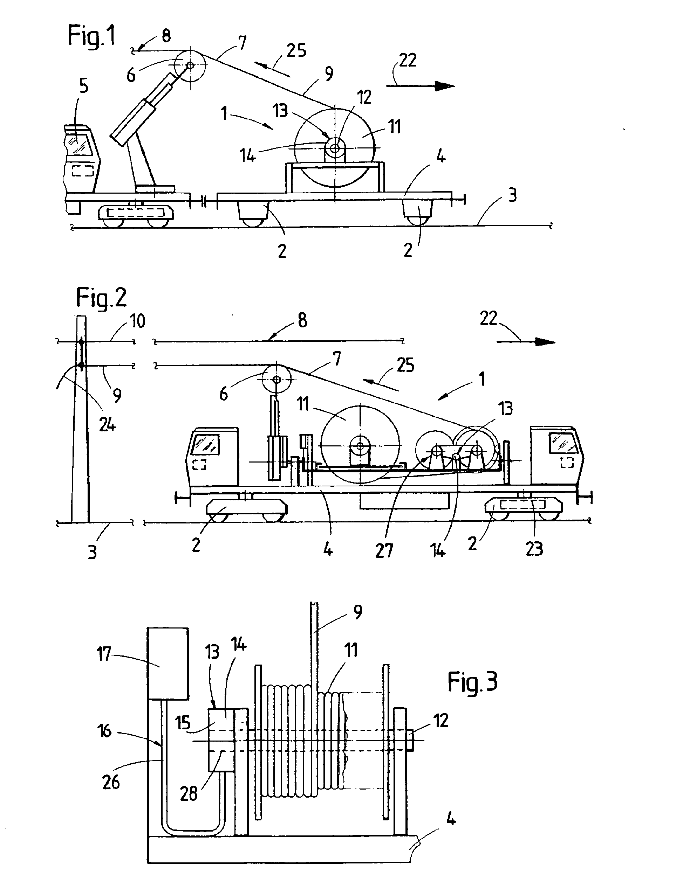

Eine in Fig.1 dargestellte Maschine 1 weist einen über Schienenfahrwerke 2 auf einem Gleis 3 verfahrbaren Maschinenrahmen 4 auf. Die Maschine 1 wird von einem gleisverfahrbaren Baufahrzeug 5 geschoben, das mit einer höhenverstellbaren Umlenkrolle 6 zur Führung eines Fahrleitungsseiles 7 einer elektrischen Fahrleitung 8 ausgestattet ist. Das Fahrleitungsseil 7 kann, wie in Fig. 2 ersichtlich, aus einem Fahrdraht 9 oder einem Tragseil 10 gebildet sein.

Auf dem Maschinenrahmen 4 ist eine Fahrdraht 9 enthaltende Speichertrommel 11 um eine Tommelwelle 12 drehbar gelagert. Wie auch in Fig. 3 ersichtlich, ist als Bremsvorrichtung 13 eine durch die Tommelwelle 12 antreibbare hydrostatische Maschine 14 vorgesehen. Diese ist als eine Antriebswelle 28 aufweisende Hydraulikpumpe 15 ausgebildet, die durch eine nicht näher dargestellte Drehmomentstütze drehfest gelagert und in einem Hydraulikkreislauf 16 mit einem Öltank 17 integriert ist.

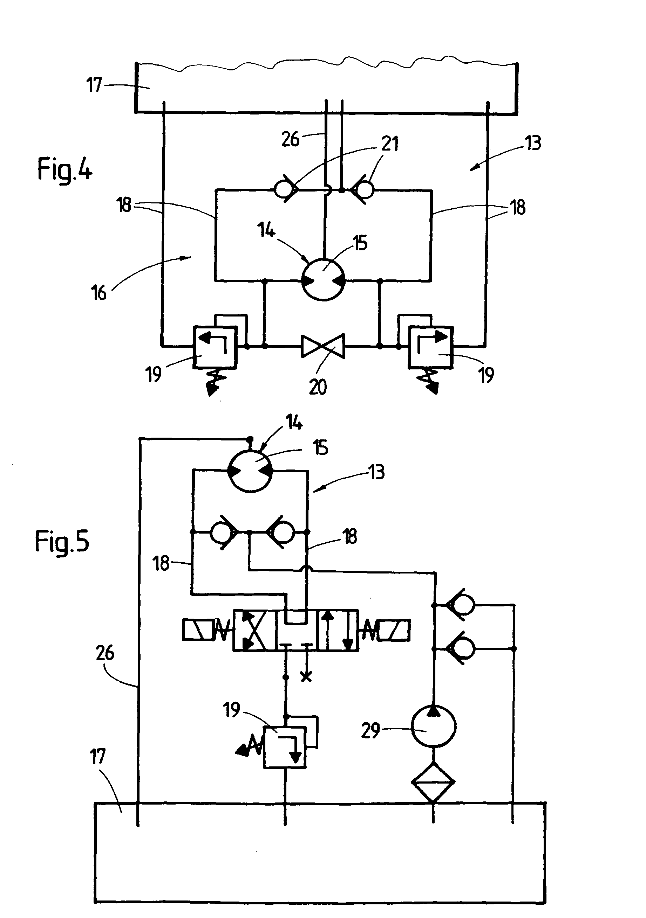

Wie in Fig. 4 dargestellt, weist der Hydraulikkreislauf 16 Hydraulikleitungen 18, zwei Druckbegrenzungsventile 19, ein Sperrventil 20 und zwei Rückschlagventile 21 auf.

Im folgenden wird die Funktionsweise der in Fig.1 und 2 dargestellten Maschinen 1 näher beschrieben.

Die Maschine 1 wird durch das Baufahrzeug 5 (s. Fig.1) bzw. durch einen eigenen Fahrantrieb 23 (Fig.2) in einer Arbeitsrichtung 22 verfahren, wobei ein Ende 24 des Fahrleitungsseiles 7 (Fig. 2) an einem örtlich fixierten Ausleger der Fahrleitung 8 befestigt ist. Dadurch kommt bei Vorfahrt der Maschine 1 eine das Fahrleitungsseil 7 von der Speichertrommel 11 abwickelnde Abzugskraft 25 zur Wirkung.

Die rotierende Speichertrommel 11 treibt die Hydraulikpumpe 15 an, die ihrerseits - je nach Drehrichtung der Speichertrommel 11- im linken oder rechten Teil des Hydraulikkreislaufes 16 Hydraulikdruck aufbaut. Damit wird die durch Rotation der Speichertrommel 11 erzeugte mechanische Energie in hydraulische Energie umgewandelt. Mit dem Druckaufbau entsteht eine zwischen dem genannten Ende 24 und der Speichertrommel 11 auf das Fahrleitungsseil 7 einwirkende Seilspannung, die durch das Druckbegrenzungsventil 19 konstant auf einem wählbaren Wert gehalten werden kann. Wie in Fig 3 ersichtlich, ist der Öltank 17 höher als die Hydraulikpumpe 15 positioniert, so daß diese ohne Saugwirkung über eine Zuführleitung 26 mit Öl versorgbar ist. Da die Drehgeschwindigkeit der Speichertrommel 11 relativ niedrig ist, ist eine dafür geeignete hydrostatische Maschine 14 zu verwenden. Alternativ könnte aber auch ein Getriebe zur Drehzahlerhöhung verwendet werden.

Bei der in Fig.2 dargestellten Maschine 1 ist als Bremsvorrichtung 13 eine mit einer Seilwinde 27 verbundene hydrostatische Maschine 14 vorgesehen. Die Funktion der Seilwinde ist beispielsweise durch GB 0 459 538 bekannt.

Gemäß dem Schaltplan in Fig.4 wird je nach der Drehrichtung der Speichertrommel 11 der linke bzw. rechte Kreislauf zur Druckerzeugung aktiviert. Mit dem Sperrventil 20 besteht die Möglichkeit einer Freilaufschaltung, um den Fahrdraht 9 unter manueller Drehung der Speichertrommel 11 für die Verlegung vorbereiten zu können.

In der in Fig.5 ersichtlichen Version eines Hydraulikkreislaufes 16 ist eine Hydraulikpumpe 29 vorgesehen, durch die auch bei Stillstand der Maschine 1 der in der Hydraulikleitung 18 vorherrschende Hydraulikdruck konstant gehalten werden kann.

## Patentansprüche

1. Verfahren zur Verlegung eines aus einem Fahrdraht (9) oder einem Tragseil (10) einer elektrischen Fahrleitung (8) eines Gleises (3) gebildeten Fahrleitungsseiles (7), wobei durch eine - mittels einer Maschinenvorfahrt einerseits und einer örtlichen Befestigung eines Endes (24) des Fahrleitungsseiles (7) andererseits erzeugte - auf das Fahrleitungsseil (7) einwirkende Abzugskraft (25) mechanische Energie erzeugt wird, **dadurch gekennzeichnet, daß** diese mechanische Energie in eine hydraulische Energie zur Herstellung eines Hydraulikdruckes umgewandelt wird, der durch ein Druckbegrenzungsventil (19) auf einen Druckhöchstwert einstellbar ist.

2. Maschine (1) zur Verlegung eines aus einem Fahrdraht (9) oder einem Tragseil (10) einer elektrischen Fahrleitung (8) eines Gleises (3) gebildeten Fahrleitungsseiles (7), mit einem auf Schienenfahrwerken (2) verfahrbaren Maschinenrahmen (4), einer das Fahrleitungsseil (7) lagernden Speichertrommel (11) und einer - mittels einer Maschinenvorfahrt einerseits und einer örtlichen Befestigung eines Endes (24) des Fahrleitungsseiles (7) andererseits erzeugten - auf das Fahrleitungsseil (7) einwirkenden Abzugskraft (25) entgegenwirkenden Bremsvorrichtung (13) zur Erzeugung einer gewünschten Verlegespannung, **dadurch gekennzeichnet, daß** die Bremsvorrichtung (13) als durch die Abzugskraft (25) antreibbare hydrostatische Maschine (14) ausgebildet ist, der ein Hydraulikkreislauf (16) mit einem Druckbegrenzungsventil (19) zugeordnet ist.

3. Maschine nach Anspruch 2, **dadurch gekennzeichnet, daß** eine Antriebswelle (28) der hydrostatischen Maschine (14) zur Rotation mit der Speichertrommel (11) gekoppelt ist.

4. Maschine nach Anspruch 3, **dadurch gekennzeichnet, daß** die Antriebswelle (28) der hydrostatischen Maschine (14) koaxial mit einer Trommelwelle (12) der Speichertrommel (11) verbunden ist.

5. Maschine nach Anspruch 3 oder 4, daß ein Öltank (17) des Hydraulikkreislaufes (16) bezüglich der Vertikalen höher als die hydrostatische Maschine (14) angeordnet ist.

6. Maschine nach Anspruch 2, **dadurch gekennzeichnet, daß** eine Antriebswelle (28) der hydrostatischen Maschine (14) zur Rotation mit einer in Abzugsrichtung des Fahrleitungsseiles (7) der Speichertrommel (11) nachgeordneten, zur Umwicklung durch das Fahrleitungsseil (7) vorgesehenen Seilwinde (27) gekoppelt ist.

## Claims

1. A method of installing a catenary cable (7) formed by a contact wire (9) or a supporting cable (10) of an electrical catenary (8) of a track (3), wherein mechanical energy is generated by a pull-off force (25) which acts upon the catenary cable (7) and is generated, on the one hand, by advancing a machine and, on the other hand, by attaching one end (24) of the catenary cable (7) locally, **characterized in that** said mechanical energy is converted into hydraulic energy for producing hydraulic pressure which is adjustable to a maximum pressure value by means of a pressure relief valve (19).

2. A machine (1) for installing a catenary cable (7) formed by a contact wire (9) or a supporting cable (10) of an electrical catenary (8) of a track (3), comprising a machine frame (4) mobile on on-track undercarriages (2), a storage drum (11) bearing the catenary cable (7), and a braking device (13) for producing a desired installation tension, the braking device counteracting a pull-off force (25) which acts upon the catenary cable (7) and is generated, on the one hand, by advancing a machine and, on the other hand, by attaching one end (24) of the catenary cable (7) locally, **characterized in that** the braking device (13) is designed as a hydrostatic machine (14) which is actuatable by the pull-off force (25) and with which a hydraulic circuit (16) having a pressure relief valve (19) is associated.

3. A machine according to claim 2, **characterized in that** a drive shaft (28) of the hydrostatic machine (14) is coupled for rotation to the storage drum (11).

4. A machine according to claim 3, **characterized in that** the drive shaft (28) of the hydrostatic machine (14) is connected coaxially to a drum shaft (12) of the storage drum (11).

5. A machine according to claim 3 or 4, **characterized in that** an oil reservoir (17) of the hydraulic circuit (16) is arranged higher than the hydrostatic machine (14) with regard to the vertical.

6. A machine according to claim 2, **characterized in that** a drive shaft (28) of the hydrostatic machine (14) is coupled for rotation to a cable winch (27) which is arranged following the storage drum (11) in the pull-off direction of the catenary cable (7) and provided for wrapping the catenary cable (7) around.

## Revendications

1. Procédé pour la pose d'un câble de caténaire (7) formé d'un fil de contact (9) ou d'un câble porteur (10) d'une caténaire électrique (8) d'une voie ferrée (3), dans lequel de l'énergie mécanique est générée par une force d'extraction (25) agissant, au moyen d'une avance de la machine d'un côté et d'une fixation locale d'une extrémité (24) du câble de caténaire (7) de l'autre côté, sur le câble de caténaire (7), **caractérisé en ce que** cette énergie mécanique est transformée en énergie hydraulique pour la fabrication d'une pression hydraulique qui peut être réglée sur une valeur maximale de pression par un limiteur de pression (19).

2. Machine (1) pour la pose d'un câble de caténaire (7) formé d'un fil de contact (9) ou d'un câble porteur (10) d'une caténaire électrique (8) d'une voie ferrée (3), comprenant un châssis de machine (4) déplaçable sur des mécanismes de roulement ferroviaires (3), un tambour de stockage (11) stockant le câble de caténaire (7) et un dispositif de freinage (13) pour générer une tension de pose souhaitée, agissant à l'encontre d'une force d'extraction (25) agissant, au moyen d'une avance de la machine d'un côté et d'une fixation locale d'une extrémité (24) du câble de caténaire (7) de l'autre côté, sur le câble de caténaire (7), **caractérisée en ce que** le dispositif de freinage (13) est réalisé en tant que machine hydrostatique (14) pouvant être entraînée par la force d'extraction (25) à laquelle est associé un circuit hydraulique (16) avec un limiteur de pression (19).

3. Machine selon la revendication 2, **caractérisée en ce qu'**un arbre moteur (28) de la machine hydrostatique (14) est raccordé au tambour de stockage (11) pour sa rotation.

4. Machine selon la revendication 3, **caractérisée en ce que** l'arbre moteur (28) de la machine hydrostatique (14) est relié de manière coaxiale à un arbre de tambour (12) du tambour de stockage (11).

5. Machine selon la revendication 3 ou 4, **caractérisée en ce qu'**un réservoir d'huile (17) du circuit hydraulique (16) est disposé plus haut que la machine hydrostatique (14) par rapport à la verticale.

6. Machine selon la revendication 2, **caractérisée en ce qu'**un arbre moteur (28) de la machine hydrostatique (14) est raccordé à un treuil à câble (27) disposé en aval du tambour de stockage (11) dans la direction d'extraction du câble de caténaire (7), prévu pour l'enroulement par le câble de caténaire (7), pour sa rotation.
